# EUROPÄISCHE PATENTANMELDUNG

(11) **EP 1 610 123 A1**
(43) Veröffentlichungstag der Anmeldung: **28.12.2005**
(21) Anmeldenummer: 05010414.0
(22) Anmeldetag: 13.05.2005
(51) Int. Cl.: G01N 29/20

(54) **Prüfstand und Verfahren zur Messung der Schalldämmung oder Einfügungsdämmung an einem Prüfobjekt**

(30) Priorität: 21.06.2004 DE 102004029714
(71) Anmelder: Carcoustics Tech Center GmbH, 51381 Leverkusen (DE)
(72) Erfinder: Bungenberg, Ralph, 40627 Düsseldorf (DE)
(74) Vertreter: Cohausz & Florack

(57) **Zusammenfassung**

Die Erfindung betrifft einen Prüfstand und ein Verfahren zur Messung der Schalldämmung bzw. Einfügungsdämmung eines Prüfobjektes. Der Prüfstand weist einen mit mehreren Schallsendern (6) ausgestatteten Senderaum (1) und einen daran angrenzenden Empfangsraum (2) auf, der von dem Senderaum durch eine Trennwand (3) oder einen Trennboden mit einer Prüföffnung zur Anordnung des Prüfobjektes (4) getrennt ist. Der Senderaum ist mit einem Schallsender-Array (5) versehen, das mindestens vier Schallsender (6) umfasst, die in einer im wesentlichen parallel zur Trennwand (3) bzw. zum Trennboden verlaufenden Ebene angeordnet sind. Den Schallsendern (6) ist eine Steuerung zugeordnet, mittels der die Schallsender derart ansteuerbar sind, dass sich wahlweise ein diffuses Schallfeld oder ein im wesentlichen eindimensionales, auf das Prüfobjekt (4) gerichtetes Schallfeld ergibt. Bei der Messung mit eindimensionalem Schallfeld ist eine Ansteuerung der Schallsender (6) möglich, die einen senkrechten Schalleinfall oder wahlweise einen bestimmten von der Senkrechten abweichenden Einfallswinkel auf das Prüfobjekt (4) ergibt. Dabei ist die Steuerung vorzugsweise so ausgebildet, dass der Einfallswinkel des eindimensionalen Schallfeldes auf das Prüfobjekt (4) beliebig einstellbar ist.

## Beschreibung

Die Erfindung betrifft einen Prüfstand und ein Verfahren zur Messung der Schalldämmung bzw. Einfügungsdämmung eines Prüfobjektes.

Zur Messung der Schalldämmung großer Bauteile und Materialaufbauten werden so genannte Fenster- sowie Deckenprüfstände verwendet. Diese Prüfstände bestehen im allgemeinen aus einem mit Schallsendern ausgerüsteten Senderaum und einem mit einem oder mehreren Mikrophonen ausgerüsteten Empfangsraum, wobei vom Senderaum zum Empfangsraum hin eine Prüföffnung zur Anordnung des Prüfobjektes ausgebildet ist. Fensterprüfstände dienen der Messung der Schalldämmung von relativ großen, vertikal angeordneten Bauteilen und Materialaufbauten, wie z.B. Karosseriestirnwandverkleidungen, während waagerechte Bauteile, wie z.B. Fahrzeugbodenaufbauten, in entsprechenden Deckenprüfständen geprüft werden. Herkömmliche Fenster- und Deckenprüfständen weisen Schallsender und Raumgeometrien auf, die ein diffuses Schallfeld ergeben.

Eine klassische Messvorrichtung zur Bestimmung der frequenzabhängigen Schalldämmung von Materialproben ist das "doppelte" Impedanzmessrohr (Kundtsche Rohr). Mit ihm lassen sich verhältnismäßig hohe Messgenauigkeiten erzielen, wobei für die Messung relativ kleine Materialproben ausreichen. Jedoch wird bei diesem Messverfahren ein eindimensionales Wellenfeld erzeugt, d.h. der Schall fällt senkrecht auf die Materialprobe, was den tatsächlichen akustischen Verhältnissen am Einbauort des betreffenden Bauteils häufig nicht entspricht. Die Messung mit einem "doppelten" Impedanzmessrohr entspricht im wesentlichen einer Messung des Direktschalls unter Freifeldbedingungen. Im Gegensatz zur Schallausbreitung im Freien kommt es bei der Schallausbreitung in geschlossenen Räumen zu Reflexionserscheinungen an den Raumbegrenzungen. In der Nähe einer in einem geschlossenen Raum angeordneten Schallquelle überwiegt zwar meist der Einfluss des eindimensionalen Direktschalls, etwas weiter entfernt von der Schallquelle ergibt sich aber infolge der Reflexionserscheinungen ein diffuseres Schallfeld.

Je nachdem in welchem Schallfeld die Schalldämmung eines Prüfobjektes gemessen werden soll, werden somit unterschiedliche Prüfstände benötigt. Problematisch ist dabei, dass bei ein und dem selben zu prüfenden Material in verschiedenen Prüfständen in der Regel unterschiedliche Messergebnisse für die zu ermittelnde Schalldämmung erlangt werden.

Der vorliegenden Erfindung liegt die Aufgabe zugrunde, einen Prüfstand und ein Verfahren bereitzustellen, mit denen sich das Schalldämmmaß bzw. die Einfügungsdämmung an Bauteilen, Materialien oder Materialaufbauten unter verschiedenen akustischen Schallfeldern mit relativ geringem Arbeitsaufwand ermitteln lässt.

Gelöst wird diese Aufgabe durch einen Prüfstand mit den Merkmalen des Anspruchs 1 bzw. ein Verfahren mit den Merkmalen des Anspruchs 16.

Der erfindungsgemäße Prüfstand weist einen mit mehreren Schallsendern ausgestatteten Senderaum und einen daran angrenzenden Empfangsraum auf, der von dem Senderaum durch eine Trennwand oder einen Trennboden mit einer Prüföffnung zur Anordnung des Prüfobjektes abgetrennt ist. Der Senderaum ist mit einem Schallsender-Array versehen, das mindestens vier Schallsender umfasst, die in einer im wesentlichen parallel zur Trennwand bzw. zum Trennboden verlaufenden Ebene angeordnet sind. Den Schallsendern ist eine Steuerung zugeordnet, mittels der die Schallsender derart ansteuerbar sind, dass sich wahlweise ein diffuses Schallfeld oder ein im wesentlichen eindimensionales, auf die fensterartige Prüföffnung der Trennwand bzw. des Trennbodens gerichtetes Schallfeld ergibt. In dem Empfangsraum ist mindestens ein Mikrophon zur Aufnahme des vom Prüfkörper durchgelassenen Schalls angeordnet.

Die Erfindung ermöglicht somit die Messung der Schalldämmung bzw. Einfügungsdämmung an verschiedenen Prüfobjekten jeweils unter verschiedenen Schallfeldern in einem einzigen Prüfstand. Der erfindungsgemäße Prüfstand ersetzt bzw. vereint in sich verschiedene Prüfstände, z.B. einen Fensterprüfstand und ein doppeltes Impedanzmessrohr (TL Rohr). Hierdurch lässt sich der bislang erforderliche Arbeitsaufwand, der unter anderem durch das Herrichten der verschiedenen, jeweils ein spezifisches Schallfeld erzeugenden Prüfstände bestimmt ist, verringern.

Eine vorteilhafte Ausgestaltung der Erfindung besteht darin, dass die Schallsender mittels der Steuerung des Prüfstandes derart ansteuerbar sind, dass sich ein im wesentlichen eindimensionales Schallfeld ergibt, das wahlweise senkrecht oder in einem von der Senkrechten abweichenden Einfallswinkel auf die fensterartige Prüföffnung gerichtet ist. Dabei ist die Steuerung vorzugsweise so ausgebildet, dass der Einfallswinkel des im wesentlichen eindimensionalen Schallfeldes auf das Prüfobjekt beliebig veränderbar ist. Der erfindungsgemäße Prüfstand bietet dann zusätzlich die Option, Messungen unter einem beliebig definierten Schalleinfallswinkel auf das Prüfobjekt durchzuführen. D.h., durch die Erfindung wird ein einziger Prüfstand für alle in Frage kommenden Schallfeldbedingungen (senkrechter Schalleinfall, diffuses Schallfeld bzw. jeder gezielte Schalleinfallswinkel (+ 90° bis - 90°)) geschaffen.

Die den Schallsendern zugeordnete Steuerung kann insbesondere aus einer Mehrkanal-Computersteuerung bestehen.

Hinsichtlich der Erzeugung eines eindimensionalen Schallfeldes sollte der Senderaum innenseitig mit einer schallabsorbierenden bzw. reflexionsarmen Auskleidung versehen sein. Auf diese Weise kann die Entstehung reflexionsbedingter diffuser Schallfeldanteile unterdrückt werden.

Eine weitere vorteilhafte Ausgestaltung des erfindungsgemäßen Prüfstandes ist dadurch gekennzeichnet, dass der Senderaum und der Empfangsraum miteinander gekoppelt raumbeweglich gelagert sind, sodass die Prüföffnung wahlweise vertikal oder horizontal oder schräg positionierbar ist. Durch diese Ausgestaltung vereint der erfindungsgemäße Prüfstand in sich einen Fenster- und einen Deckenprüfstand bzw. Prüfstände, bei denen der Prüfling in einer speziellen räumlichen Lage angeordnet werden muss oder bei denen die Schwerkraft auf den Prüfling aus einem bestimmten Raumwinkel angreifen muss.

Weitere bevorzugte und vorteilhafte Ausgestaltungen des erfindungsgemäßen Prüfstandes sowie des erfindungsgemäßen Verfahrens sind in den Unteransprüchen angegeben.

Nachfolgend wird die Erfindung anhand einer ein Ausführungsbeispiel darstellenden Zeichnung näher erläutert. Darin zeigen:
- Fig. 1: eine schematische Darstellung eines erfindungsgemäßen Prüfstandes in perspektivischer Ansicht;
- Fig. 2: eine schematische Darstellung eines Teils des Prüfstandes gemäß Fig. 1 in einem Steuerungsmodus, bei dem sich ein diffuses Schallfeld ergibt;
- Fig. 3: eine schematische Darstellung zur weiteren Veranschaulichung eines Steuerungsmodus zur Erzeugung eines diffusen Schallfeldes;
- Fig. 4: eine schematische Darstellung eines Teils des Prüfstandes gemäß Fig. 1 in einem Steuerungsmodus, bei dem sich ein eindimensionales Schallfeld mit senkrechtem Schalleinfall auf das Prüfobjekt ergibt;
- Fig. 5: eine schematische Darstellung zur weiteren Veranschaulichung des Steuerungsmodus zur Erzeugung einer ebenen Wellenfront mit senkrechtem Schalleinfall auf das Prüfobjekt;
- Fig. 6: eine schematische Darstellung eines Teils des Prüfstandes gemäß Fig. 1 in einem Steuerungsmodus, bei dem sich ein eindimensionales Schallfeld mit einem bestimmten von der Senkrechten abweichenden Schalleinfallswinkel auf das Prüfobjekt ergibt;
- Fig. 7: eine schematische Darstellung zur weiteren Veranschaulichung des Steuerungsmodus zur Erzeugung einer ebenen Wellenfront mit definiertem, von der Senkrechten abweichenden Schalleinfallswinkel auf das Prüfobjekt; und
- Fig. 8: eine schematische Darstellung einer Ausführungsform des erfindungsgemäßen Prüfstandes, bei der dieser raumbeweglich (schwenkbar) gelagert ist.

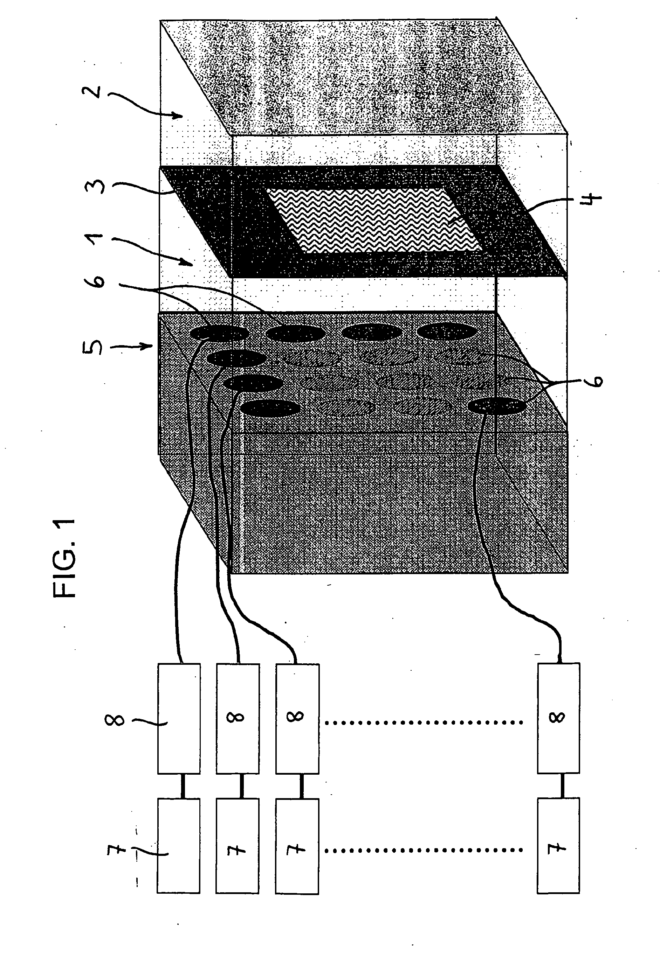

Der in Fig. 1 schematisch dargestellte Prüfstand weist einen Senderaum 1 und einen daran unmittelbar angrenzenden Empfangsraum 2 auf, der von dem Senderaum durch eine Trennwand 3 abgetrennt ist, die eine Prüföffnung zur Anordnung eines Prüfobjektes 4 aufweist.

Der Senderaum 1 und der Empfangsraum 2 sind miteinander gekoppelt in einem Gestell oder Rahmen (nicht gezeigt) raumbeweglich gelagert, sodass die Prüföffnung mit dem Prüfobjekt 4 wahlweise insbesondere vertikal oder horizontal angeordnet werden kann. Der erfindungsgemäße Prüfstand vereint somit in sich einen Fenster- und einen Deckenprüfstand. Die raumbewegliche Lagerung des Prüfstandes ist so ausgeführt, dass die Prüföffnung bzw. das Prüfobjekt 4 in einer beliebigen Ebene zwischen der Vertikalen und der Horizontalen angeordnet werden kann (+/-360°).

Bei dem Prüfobjekt 4 kann es sich um eine Materialprobe, einen ein- oder mehrschichtiger Materialaufbau, ein Formteil oder ein komplettes Bauteil, z.B. eine Kraftfahrzeug-Stirnwandverkleidung handeln. Die Trennwand 3 kann aus mehreren Segmenten aufgebaut sein, die eine Anpassung der Größe der Prüföffnung an das Prüfobjekt 4 gestatten.

Der Senderaum 1 ist innenseitig mit einer schallabsorbierenden Auskleidung versehen. Vorzugsweise ist der Senderaum 1 als reflexionsarmer Raum ausgebildet. Hierzu werden die Wände, die Decke und der Fußboden des Senderaums 1 mit einer hochabsorbierenden Auskleidung versehen, die beispielsweise aus in den Raum weisenden keilförmigen Elementen aus offenporigem Schaumstoff oder anderen alternativen Absorptionsmaterialien gebildet ist.

Der Senderaum 1 ist mit einem Schallsender-Array 5 ausgerüstet, das mindestens vier gleiche, vorzugsweise mindestens sechzehn gleiche Schallsender 6 umfasst. Die Anzahl der Schallsender entspricht vorzugsweise einer Quadratzahl (4, 9, 16, 25,...). Die Schallsender 6 sind in einer gemeinsamen Ebene und gleichmäßig zueinander beabstandet in einem quadratischen Raster angeordnet. Anstelle eines Rasters kann gegebenenfalls auch eine zirkulare oder stochastische Anordnung der Schallsender 6 vorgesehen werden. Bei der zirkularen Anordnung sind die Schallsender 6 vorzugsweise auf konzentrischen Kreisen angeordnet. Die Schallsender 6 können als Breitband-Lautsprecher ausgeführt sein. Sie können insbesondere aus Lautsprechern bestehen, die eine planar ausgebildete Schwingmembran aufweisen. Neben Breitband-Lautsprechern können auch Hochton-Lautsprecher für hochfrequente Untersuchungen verwendet werden. Das Lautsprecherpaneel kann hierzu insbesondere auswechselbar gestaltet sein, d.h. für hochfrequente Untersuchungen kann ein Paneel mit Breitbandlautsprechern gegen ein Paneel mit Hochtonlautsprecher, die gegenüber Breitbandlautsprechern in der Regel kleine Abmessungen aufweisen, ausgewechselt werden.

Das planare Schallsender-Array 5 bzw. die gemeinsame Ebene der Schallsender 6 ist parallel zu der Trennwand 3 angeordnet. Das Schallsender-Array 5 und/oder die im wesentlichen parallel dazu verlaufende Trennwand 3 sind verschiebbar, sodass der Abstand zwischen Schallsender-Array 5 und Trennwand 3 einstellbar ist.

Jedem Schallsender 6 ist ein eigener Tongenerator 7 sowie ein eigener Leistungsverstärker 8 zugeordnet. Die Schallsender 6 sind somit selektiv einzeln ansteuerbar. Der Übersichtlichkeit wegen ist in der Zeichnung nur ein Teil der Tongeneratoren 7 und Leistungsverstärker 8 dargestellt.

Den Tongeneratoren 7 ist eine Steuerung zugeordnet, mittels der sie bzw. die Schallsender 6 einzeln derart ansteuerbar sind, dass sich wahlweise ein diffuses Schallfeld oder ein im wesentlichen eindimensionales, auf die fensterartige Öffnung der Trennwand 3 mit dem dort angeordneten Prüfobjekt 4 gerichtetes Schallfeld ergibt. Die den Tongeneratoren 7 bzw. Schallsendern 6 zugeordnete Steuerung kann beispielsweise aus einer Mehrkanal-Computersteuerung bestehen.

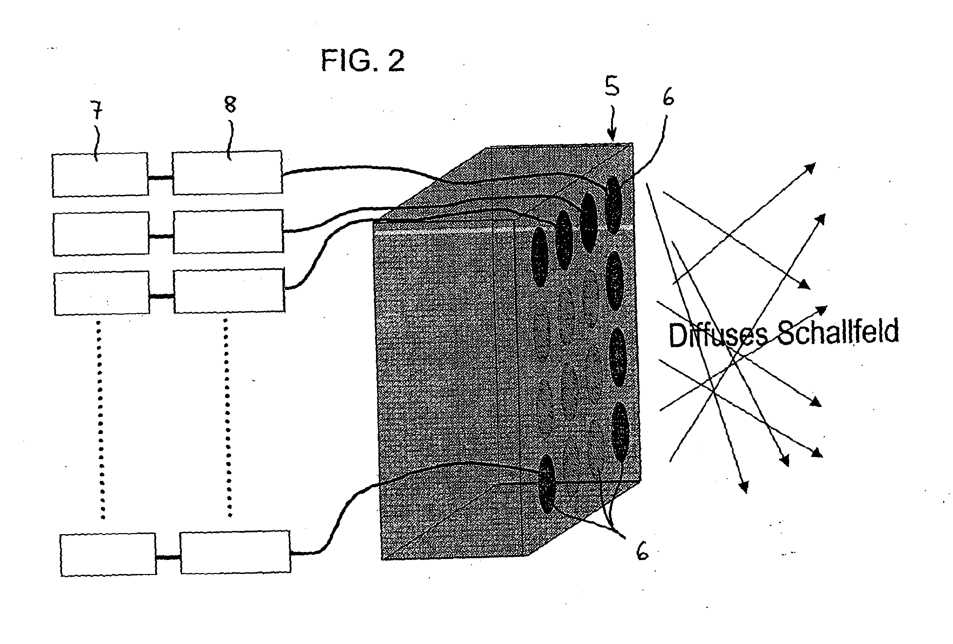

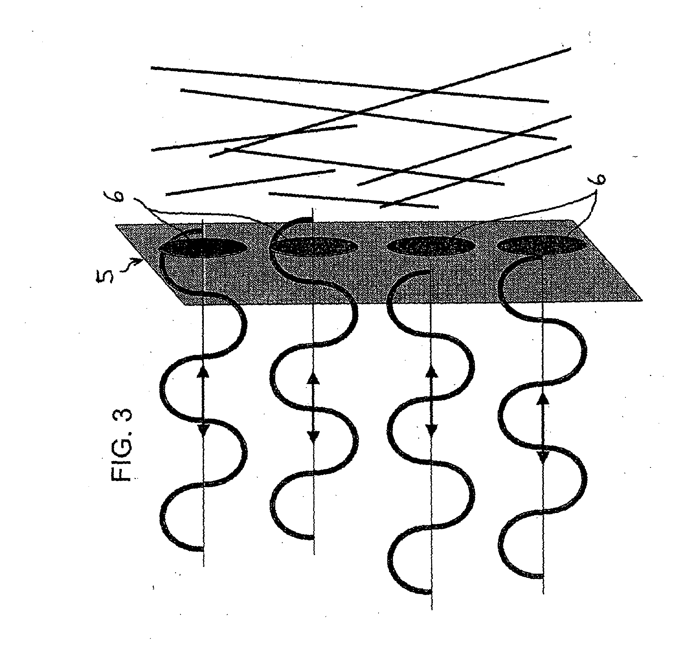

In den Fig. 2 und 3 ist ein Steuerungsmodus veranschaulicht, bei dem sich im Senderaum 1 ein diffuses Schallfeld ergibt. Die Generatoren 7 werden hier alle mit zeitlich wechselnder Phasenlage angesteuert. Dementsprechend ergibt sich eine diffuse Wellenfront. Der diffuse Schalleinfall auf das Prüfobjekt (Prüfling) umfasst Schalleinfallswinkel im Bereich von -90° bis +90° bezogen auf einen senkrechten Schalleinfall mit einem Schalleinfallswinkel von 0°. Dieser Steuerungsmodus entspricht den Messbedingungen in einem herkömmlichen Fensterprüfstand bzw. Deckenprüfstand.

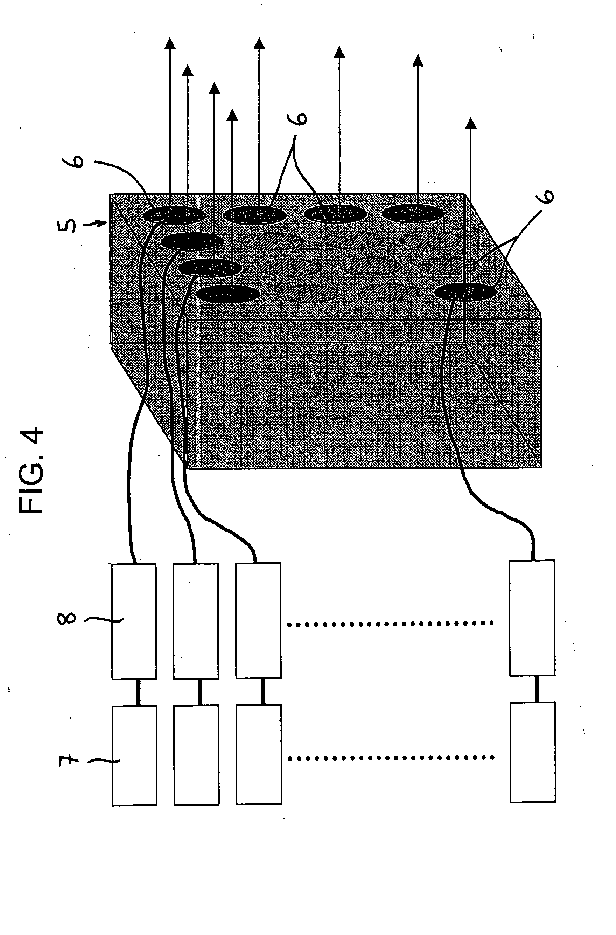

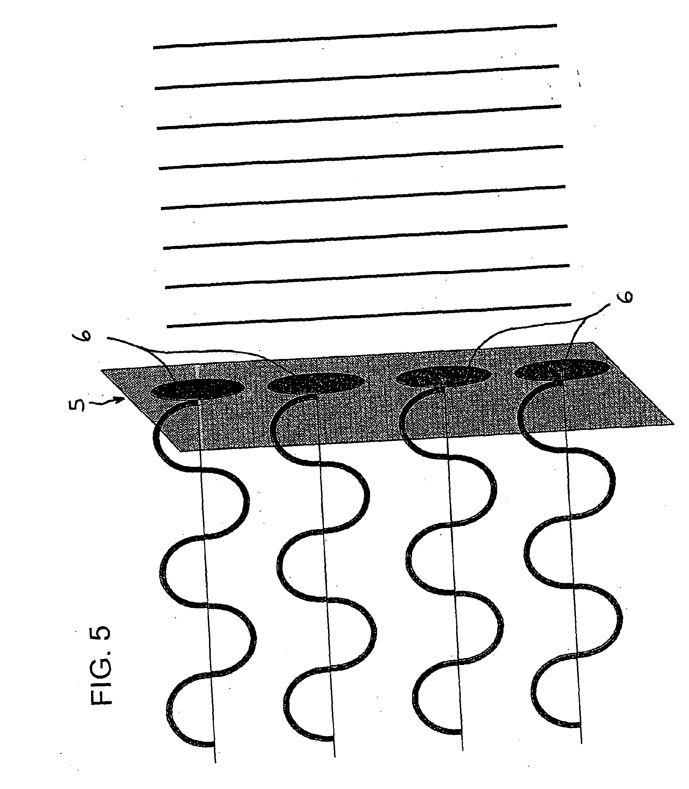

Wie in den Figuren 4 und 5 veranschaulicht ist, lässt sich der erfindungsgemäße Prüfstand ferner in einem Steuerungsmodus betreiben, der Freifeldbedingungen mit senkrechtem Schalleinfall auf das Prüfobjekt entspricht. In diesem Modus werden die Generatoren 7 alle mit gleicher Phasenlage angesteuert. Alternativ können auch alle Leistungsverstärker 8 gleichzeitig mit einem einzigen Generator angesteuert werden. Dabei ergibt sich jeweils eine im wesentlichen ebene Wellenfront, d.h. ein eindimensionales Schallfeld mit senkrechtem Schalleinfall auf das Prüfobjekt 4 (vgl. Fig. 1).

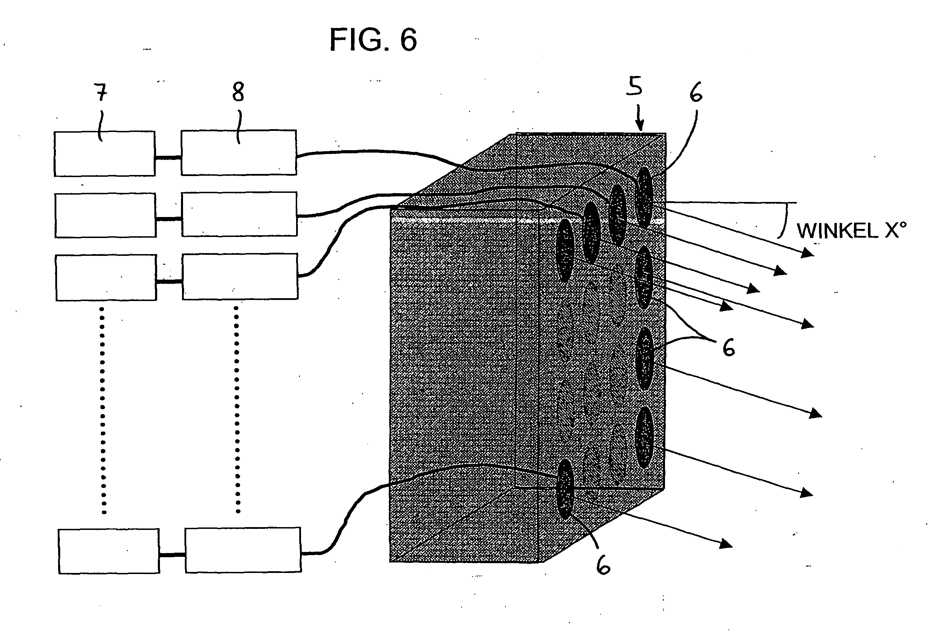

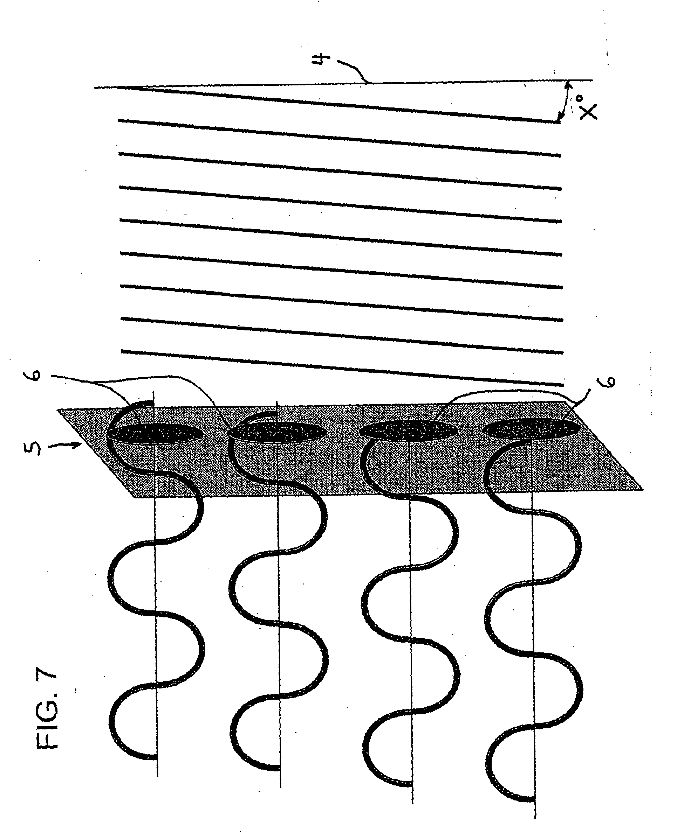

Darüber hinaus lässt sich der erfindungsgemäße Prüfstand auch in einem Steuerungsmodus betreiben, bei dem sich ein im wesentlichen eindimensionales Schallfeld ergibt, das in einem vom senkrechten Schalleinfall abweichenden Einfallswinkel X° auf das Prüfobjekt 4 gerichtet ist. Wie in den Figuren 6 und 7 schematisch dargestellt, werden die Generatoren 7 hierzu alle mit konstanter aber gruppenweise mit gegeneinander verschobener Phasenlage angesteuert. Die Generatoren 7 werden hierzu in Gruppen gegliedert, die jeweils entweder einer Reihe oder einer Spalte des rasterförmigen Schallsender-Arrays 5 zugeordnet sind.

Fig. 7 veranschaulicht, dass der Phasenverschiebungswinkel zwischen dem Ansteuerungssignal für eine Reihe oder Spalte von Schallsendern 6 gegenüber dem Ansteuerungssignal für die nächstfolgende Reihe bzw. Spalte von Schallsendern 6 jeweils gleich groß eingestellt wird. Dementsprechend ergibt sich eine im wesentlichen ebene Wellenfront mit einem dem eingestellten Phasenverschiebungswinkel entsprechenden Schalleinfallswinkel X° auf das Prüfobjekt 4.

Der Phasenverschiebungswinkel lässt sich mit der Steuerungsvorrichtung des erfindungsgemäßen Prüfstand beliebig einstellen, sodass ein im wesentliches eindimensionales Schallfeld erzeugt wird, das mit einem bestimmten Schalleinfallswinkel auf das Prüfobjekt 4 trifft.

Im Empfangsraum 2 des Prüfstandes ist zur Aufnahme des vom Prüfobjekt 4 hindurchgelassenen Schalls mindestens ein Mikrophon (nicht gezeigt) angeordnet (vgl. Fig. 1). Vorzugsweise wird jedoch im Empfangsraum 2 ein mehrere Mikrophone umfassendes Mikrophon-Array (nicht gezeigt) angeordnet. Die Mikrophone sind dabei in einer parallel zur Ebene der Trennwand 3 verlaufenden Ebene und gleichmäßig zueinander beabstandet in einem quadratischen Raster angeordnet. Mit einem solchen Mikrophon-Array ist eine Ortung von lokalen Teilschallquellen an abstrahlenden Strukturaberflächen möglich. Insbesondere ermöglicht ein solches Mikrophon-Array eine Ermittlung der Schalldruck- bzw. Schallpegelverteilung über das Prüfobjekt 4. Es können so Informationen über die Abstrahlcharakteristik bzw. die Modenverteilung in Bezug auf das Prüfobjekt 4 erlangt werden. Darüber hinaus kann der Schallpegel im Empfangsraum auch mit einem im Raum rotierenden Mikrophon gemessen werden.

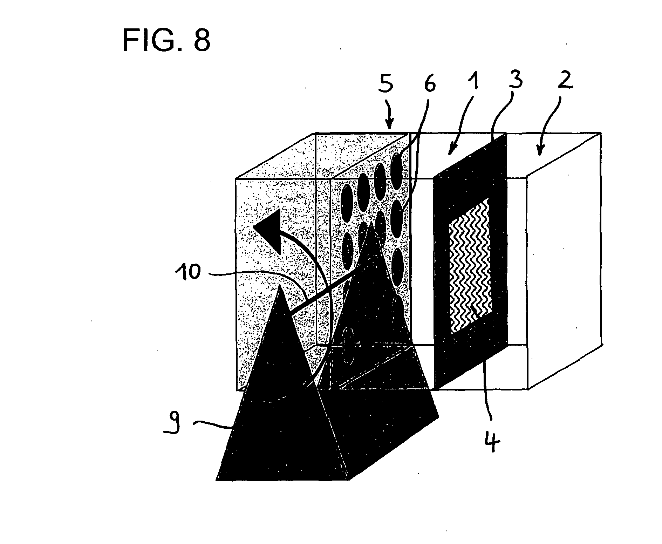

In Fig. 8 ist schematisch eine Ausführung dargestellt, bei der der erfindungsgemäße Prüfstand schwenkbar gelagert ist. Der Schwenkbereich beträgt 360°. Mit 9 ist eine Halterung bzw. ein Gestell zur schwenkbaren Aufnahme des Prüfstandes bezeichnet. Die Drehachse ist mit 10 bezeichnet. Mit einer derartigen Ausführungsform können Messungen der Schalldämmung oder Einfügungsdämmung durchgeführt werden, bei denen die Schwerkraft in einem beliebigen definierten Winkel auf das Prüfobjekt 4 einwirkt.

Die Erfindung ist in ihrer Ausführung nicht auf das vorstehend beschriebene Ausführungsbeispiel beschränkt. Vielmehr sind eine Vielzahl von Varianten möglich, die auch bei grundsätzlich abweichender Gestaltung von dem in den Ansprüchen wiedergegebenen Erfindungsgedanken Gebrauch machen. So kann das Schallsender-Array 5 beispielsweise auch weniger oder mehr als 16 gleiche Schallsender umfassen, z.B. kann ein aus 12, 20 oder 100 einzeln oder gruppenweise ansteuerbaren Lautsprechern gebildetes Schallsender-Array 5 verwendet werden. Neben der quadratischen und rasterförmigen Anordnung der Schallsender 6 liegt auch eine kreisförmige oder stochastische Anordnung der Schallsender für die Ausbildung spezieller Schallfelder, beispielsweise zur Erzeugung einer Kugelwellenfront im Rahmen der Erfindung. Ferner kann der Senderaum 1 auch oberhalb oder unterhalb des Empfangsraumes 2 entsprechend einem Deckenprüfstand angeordnet sein.

## Patentansprüche

1. Prüfstand zur Messung der Schalldämmung oder Einfügungsschalldämmung eines Prüfobjektes (4), mit einem Senderaum (1), in welchem mehrere Schallsender (6) angeordnet sind, und einem Empfangsraum (2), der von dem Senderaum durch eine Trennwand (3) oder einen Trennboden mit einer Prüföffnung zur Anordnung des Prüfobjektes (4) getrennt ist, wobei in dem Empfangsraum (2) mindestens ein Mikrophon angeordnet ist,
**dadurch gekennzeichnet, dass**
der Senderaum (1) mit einem Schallsender-Array (5) versehen ist, das mindestens vier Schallsender (6) umfasst, die in einer im wesentlichen parallel zur Trennwand (3) oder zum Trennboden verlaufenden Ebene angeordnet sind, wobei den Schallsendern (6) eine Steuerung zugeordnet ist, mittels der die Schallsender (6) derart ansteuerbar sind, dass sich wahlweise ein diffuses Schallfeld oder ein im wesentlichen eindimensionales, auf die Prüföffnung gerichtetes Schallfeld ergibt.

2. Prüfstand nach Anspruch 1,
**dadurch gekennzeichnet, dass**
die Schallsender (6) mittels der Steuerung derart ansteuerbar sind, dass sich ein im wesentlichen eindimensionales Schallfeld ergibt, das wahlweise senkrecht oder in einem von der Senkrechten abweichenden Einfallswinkel (X°) auf die Prüföffnung gerichtet ist.

3. Prüfstand nach Anspruch 1 oder 2,
**dadurch gekennzeichnet, dass**
der Einfallswinkel (X°) des im wesentlichen eindimensionalen Schallfeldes auf das Prüfobjekt mittels der Steuerung veränderbar ist.

4. Prüfstand nach einem der Ansprüche 1 bis 3,
**dadurch gekennzeichnet, dass**
das Schallsender-Array (5) mindestens 16 Schallsender (6) umfasst.

5. Prüfstand nach einem der Ansprüche 1 bis 4,
**dadurch gekennzeichnet, dass**
die Schallsender (6) in einem gleichmäßigen Raster, zirkular oder stochastisch angeordnet sind.

6. Prüfstand nach einem der Ansprüche 1 bis 5,
**dadurch gekennzeichnet, dass**
die Schallsender (6) Breitband-Lautsprecher und/oder Hochton-Lautsprecher sind.

7. Prüfstand nach einem der Ansprüche 1 bis 6,
**dadurch gekennzeichnet, dass**
die Schallsender (6) in einem austauschbaren Paneel montiert sind.

8. Prüfstand nach einem der Ansprüche 1 bis 7,
**gekennzeichnet durch**
mehrere gegeneinander austauschbare Schallsender-Paneele, umfassend mindestens ein Breitbandlautsprecher aufweisendes Schallsender-Paneel und mindestens ein Hochtonlautsprecher aufweisendes Schallsender-Paneel.

9. Prüfstand nach einem der Ansprüche 1 bis 8,
**dadurch gekennzeichnet, dass**
jedem Schallsender (6) ein eigener Tongenerator (7) und/oder ein eigener Leistungsverstärker (8) zugeordnet ist.

10. Prüfstand nach einem der Ansprüche 1 bis 9,
**dadurch gekennzeichnet, dass**
die Steuerung aus einer Mehrkanal-Computersteuerung besteht.

11. Prüfstand nach einem der Ansprüche 1 bis 10,
**dadurch gekennzeichnet, dass**
der Senderaum (1) innenseitig mit einer schallabsorbierenden Auskleidung versehen ist.

12. Prüfstand nach einem der Ansprüche 1 bis 11,
**dadurch gekennzeichnet, dass**
in dem Empfangsraum (2) ein mehrere Mikrophone umfassendes Mikrophon-Array oder ein rotierendes Mikrophon angeordnet ist.

13. Prüfstand nach einem der Ansprüche 1 bis 12,
**dadurch gekennzeichnet, dass**
das Schallsender-Array (5) und/oder die/der im wesentlichen parallel dazu verlaufende Trennwand/Trennboden verschiebbar sind, sodass der Abstand zwischen Schallsender-Array (5) und Trennwand (3) oder Schallsender-Array und Trennboden einstellbar ist.

14. Prüfstand nach einem der Ansprüche 1 bis 13,
**dadurch gekennzeichnet, dass**
das Volumen des Senderaums (1) einstellbar ist.

15. Prüfstand nach einem der Ansprüche 1 bis 14,
**dadurch gekennzeichnet, dass**
der Senderaum (1) und der Empfangsraum (2) miteinander gekoppelt raumbeweglich gelagert sind, sodass die Prüföffnung wahlweise vertikal, horizontal oder beliebig schräg positionierbar ist.

16. Verfahren zur Messung der Schalldämmung oder Einfügungsschalldämmung eines Prüfobjektes (4), bei dem ein Prüfstand verwendet wird, der einen Senderaum (1) mit mehreren Schallsendern (6) und einen Empfangsraum (2) mit mindestens einem Mikrophon umfasst, wobei der Senderaum (1) und der Empfangsraum (2) voneinander durch eine Trennwand (3) oder ein Trennboden mit einer fensterartigen Öffnung zur Anordnung des Prüfobjektes (4) getrennt sind,
**dadurch gekennzeichnet, dass**
in dem Senderaum (1) ein aus mindestens vier Schallsendern (6) gebildetes Schallsender-Array (5) in der Weise angeordnet wird, dass die Schallsender (6) in einer im wesentlichen parallel zur Trennwand (3) oder zum Trennboden verlaufenden Ebene angeordnet sind, und dass die Schallsender (6) mittels einer Steuerung derart angesteuert werden, dass sich wahlweise ein diffuses Schallfeld oder ein im wesentlichen eindimensionales, auf das Prüfobjekt (4) gerichtetes Schallfeld ergibt.

17. Verfahren nach Anspruch 16,
**dadurch gekennzeichnet, dass**
die Schallsender (6) mittels der Steuerung derart angesteuert werden, dass sich ein im wesentlichen eindimensionales Schallfeld ergibt, das wahlweise senkrecht oder in einem von der Senkrechten abweichenden Einfallswinkel (X°) auf das Prüfobjekt (4) gerichtet ist.

18. Verfahren nach Anspruch 16 oder 17,
**dadurch gekennzeichnet, dass**
der Einfallswinkel (X°) des im wesentlichen eindimensionalen Schallfeldes auf das Prüfobjekt (4) mittels der Steuerung verändert wird.

19. Verfahren nach einem der Ansprüche 16 bis 18,
**dadurch gekennzeichnet, dass**
die Schallsender (6) in einem gleichmäßigen Raster, zirkular oder stochastisch verteilt angeordnet werden.
